# EUROPÄISCHE PATENTANMELDUNG

(11) **EP 1 281 952 A1**
(43) Veröffentlichungstag der Anmeldung: **05.02.2003**
(21) Anmeldenummer: 01118232.6
(22) Anmeldetag: 30.07.2001
(51) Int. Cl.: G01N 21/37

(54) **Anordnung mit einem Infrarotstrahler und einem Infrarotsensor**

(71) Anmelder: Siemens Building Technologies AG, 8034 Zürich (CH)
(72) Erfinder: Forster, Martin, Dr., 8645 Jona (CH); Steiner, Roland, 8645 Jona (CH); Pleisch, Rolf, 8604 Volketswil (CH)
(74) Vertreter: Dittrich, Horst, Dr.

(57) **Zusammenfassung**

Die Anordnung enthält einen Infrarotstrahler (1) und einen Infrarotsensor (2) zur Überwachung der Intensität der vom Infrarotstrahler (1) ausgesandten Strahlung. Der Infrarotsensor (2) ist in der Nähe des Infrarotstrahlers (1), ausserhalb von dessen direktem Strahlengang, angeordnet, und es sind Mittel zur Beaufschlagung des Infrarotsensors (2) mit vom Infrarotstrahler (1) ausgesandter Strahlung vorgesehen. Die genannten Mittel sind durch eine vor dem Infrarotstrahler (1) und dem Infrarotsensor (2) angeordnete reflektierende oder streuende Fläche (3) gebildet, welche Strahlung des Infrarotstrahlers (1) auf den Infrarotsensor (2) reflektiert beziehungsweise streut. Die genannte Fläche (3) kann Teil der Wandung eines den Infrarotstrahler (1) und den Infrarotsensor (2) umgebenden Gehäuses (4) bilden.

## Beschreibung

Die vorliegende Erfindung betrifft eine Anordnung mit einem Infrarotstrahler und einem Infrarotsensor zur Überwachung der Intensität der vom Infrarotstrahler ausgesandten Strahlung.
In Infrarotmessgeräten oder in optoakustischen Gassensoren, die mit einer modulierten Strahlungsquelle eine Gaszelle bestrahlen, muss die Intensität der vom Infrarotstrahler ausgesandten Infratorstrahlung gemessen werden, um Intensitätsschwankungen korrigieren zu können. Bisher wird die Emission des Infrarotstrahlers durch einen in dessen direktem Strahlengang angeordneten Infrarotsensor gemessen, welcher vom Infrarotstrahler einen bestimmten Abstand aufweist. Dadurch beansprucht die durch Infrarotstrahler und Infrarotsensor gebildete Anordnung so viel Platz, dass für bestimmte Anwendungen mit beschränkten Platzverhältnissen die Emission des Infrarotstrahlers nicht überwacht werden kann.
Durch die Erfindung soll nun eine Anordnung mit einem Infrarotstrahler und einem Infrarotsensor zur Überwachung von dessen Emission angegeben werden, die kostengünstiger ist als die bekannten Lösungen, und die sich durch sehr geringen Platzbedarf auszeichnet.
Die erfindungsgemässe Lösung dieser Aufgabe ist dadurch gekennzeichnet, dass der Infrarotsensor in der Nähe des Infrarotstrahlers, ausserhalb von dessen direktem Strahlengang, angeordnet ist, und dass Mittel zur Beaufschlagung des Infrarotsensors mit vom Infrarotsender ausgesandter Strahlung vorgesehen sind.
Durch die Anordnung des Infrarotsensors ausserhalb des direkten Strahlengangs des Infrarotstrahlers und durch die Mittel zur Beaufschlagung des Infrarotsensors mit vom Infrarotstrahler ausgesandter Strahlung eröffnet sich die Möglichkeit, Infrarotstrahler und Infrarotsensor in praktisch beliebigen gegenseitigen Lagen zu platzieren, so dass der Platzbedarf für die Anordnung drastisch reduziert wird. Daraus ergibt sich nicht zuletzt auch eine Kostenreduktion.
Eine erste bevorzugte Ausführungsform der erfindungsgemässen Anordnung ist dadurch gekennzeichnet, dass die genannten Mittel durch eine vor dem Infrarotstrahler und dem Infrarotsensor angeordnete reflektierende oder streuende Fläche gebildet sind, welche Strahlung des Infrarotstrahlers auf den Infrarotsensor reflektiert beziehungsweise streut.
Eine zweite bevorzugte Ausführungsform ist dadurch gekennzeichnet, dass die genannte Fläche Teil der Wand eines den Infrarotstrahler und den Infrarotsensor umgebenden Gehäuses bildet.

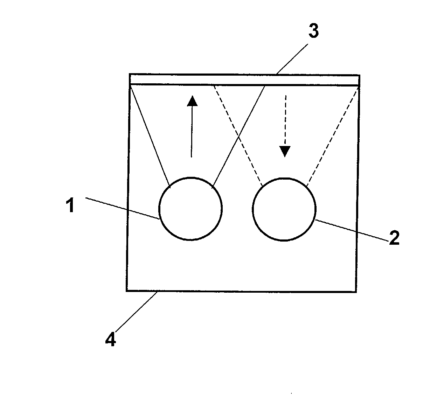

Eine dritte bevorzugte Ausführungsform der erfindungsgemässen Anordnung ist dadurch gekennzeichnet, dass das Gehäuse eine Öffnung zum Druckausgleich aufweist.
Wenn sich der Infrarotstrahler erwärmt, wird auch die umgebende Luft erwärmt, was in einem geschlossenen Gehäuse zu einer Druckerhöhung führt. Diese bedingt eine Erwärmung des Infrarotsensors, welche das durch Infrarotstrahlung erzeugte Signal des Infrarotsensors verfälscht. Durch die Gehäuseöffnung zum Druckausgleich wird dieser Fehler minimiert.
Nachfolgend wird die Erfindung anhand eines Ausführungsbeispiels und der einzigen Figur näher erläutert; die Figur zeigt eine schematische Darstellung einer erfindungsgemässen Anordnung mit einem Infrarotstrahler und einem Infrarotsensor.
Darstellungsgemäss sind ein Infrarotstrahler 1 und ein Infrarotsensor 2 so nebeneinander angeordnet, dass sie ungefähr in die gleiche Richtung "blicken", wobei jedoch der Infrarotstrahler 1 ausserhalb des direkten Strahlengangs des Infrarotsensors 2 liegt. Infrarotstrahler 1 und Infrarotsensor 2 können auf der gleichen Höhe liegen, müssen dies aber nicht. Der Infrarotstrahler 1 sendet Infrarotstrahlung unter einem bestimmten Öffnungswinkel aus und der Infrarotsensor 2 empfängt Infrarotstrahlung aus einem bestimmten Gesichtsfeld.
Der Infrarotstrahler 1 kann beispielsweise ein Strahler der in der EP-A-0 859 536 beschriebenen Art sein und als optische Quelle in einem optoakustischen Gassensor verwendet werden. Diese Sensoren enthalten im wesentlichen eine Gasmesszelle, ein Mikrofon, eine optische Quelle und gegebenenfalls eine Referenzzelle (siehe dazu EP-A-0 855 592). Die optische Quelle sendet pulsweise Licht von der Wellenlänge, die von dem zu detektierenden Gas absorbiert wird, in die Messzelle. Wenn sich in dieser Gas befindet, dann absorbiert dieses die einfallende Strahlung, erwärmt sich und dehnt sich infolgedessen aus. Die durch diese Ausdehnung bewirkte Druckschwankung in der Messzelle wird durch das Mikrofon empfangen und von einer Auswerteschaltung ausgewertet.
Eine weitere Möglichkeit der Verwendung des Infrarotstrahlers 1 liegt auf dem Gebiet der Gassensoren nach dem Durchlichtprinzip. Diese Sensoren weisen eine Infrarotquelle, in Infrarotfilter, eine Gasmesszelle und einen Detektor auf, der die Intensitätsveränderungen aufgrund von Absorptionen durch das Gas in der Messzelle misst.
Im Abstand vor dem Infrarotstrahler 1 und dem Infrarotsensor 2 ist eine reflektierende oder streuende Fläche 3 angeordnet, welche vom Infrarotstrahler 1 ausgesandte Infrarotstrahlung auf den Infrarotsensor 2 reflektiert bzw. streut. Der Infrarotsensor 2 misst diese Strahlung, welche proportional zur Intensität der vom Infrarotstrahler 1 ausgesandten Strahlung ist. Die Fläche 3 kann eine rein reflektierende/streuende oder eine rein spiegelnde oder eine teilweise transparente und teilweise reflektierende/ streuende Fläche, beispielsweise ein Infrarotfilter sein, welches eine bestimmte Wellenlänge transmittiert und andere Wellenlängen reflektiert/streut.

Die Fläche 3 kann Teil der Wandung eines den Infrarotstrahler 1 und den Infrarotsensor 2 enthaltenden geschlossenen Gehäuses 4 sein und beispielsweise eine der Seitenwände dieses Gehäuses bilden. Mindestens eine der Seitenwände des Gehäuses 4 muss infrarotdurchlässig sein, wobei die Fläche 3 gleichzeitig die refiektierende/streuende und die infrarotdurchlässige Fläche sein kann.
Das Gehäuse 4 mit dem Infrarotstrahler 1 und dem Infrarotsensor 2 kann auch eine zum Druckausgleich dienende Öffnung (nicht dargestellt) aufweisen. Wenn sich der Infrarotstrahler 1 erwärmt, erwärmt sich auch die umgebende Luft, was in einem geschlossenen Gehäuse 4 zu einer Druckerhöhung führt. Diese Druckerhöhung führt zu einer Erwärmung auf dem Infrarotsensor, welche das durch die auftreffende Infrarotstrahlung erzeugte Signal des Infrarotsensors verfälscht. Die genannte Öffnung erlaubt einen Druckausgleich, was den erwähnten Fehler bei der Strahlungsmessung minimiert.
Wie schon erwähnt wurde, kann der Infrarotstrahler 1 in der Art des in der EP-A-0 859 536 beschriebenen Strahlers ausgebildet sein. Das bedeutet insbesondere, dass der Infrarotstrahler 1 eine ebene emittierende Fläche in Gestalt einer dünnen Membran aufweist. Der Infrarotsensor 2 kann beispielsweise mindestens ein pyroelektrisches Element in Form eines sogenannten Flake aus pyroelektrischer Keramik oder einem pyroelektrischen Einkristall enthalten. Das Flake kann eine Fläche von einigen Quadratmillimetern und eine Dicke von etwa 0.1 bis 200 Mikrometer aufweisen. Dieser Infrarotsensor enthält ausserdem mindestens einen JFET als Impedanzwandler und mindestens einen hochohmigen Widerstand.
Alternativ kann der Infrarotsensor 2 mindestens ein Thermoelement in Form eines Dünnfilms enthalten und einen Verstärker aufweisen.

## Patentansprüche

1. Anordnung mit einem Infrarotstrahler (1) und einem Infrarotsensor (2) zur Überwachung der Intensität der vom Infrarotstrahler (1) ausgesandten Strahlung, **dadurch gekennzeichnet, dass** der Infrarotsensor (2) in der Nähe des Infrarotstrahlers (1), ausserhalb von dessen direktem Strahlengang, angeordnet ist, und dass Mittel zur Beaufschlagung des Infrarotsensors (2) mit vom Infrarotstrahler (1) ausgesandter Strahlung vorgesehen sind.

2. Anordnung nach Anspruch 1, **dadurch gekennzeichnet, dass** die genannten Mittel durch eine vor dem Infrarotstrahler (1) und dem Infrarotsensor (2) angeordnete reflektierende oder streuende Fläche (3) gebildet sind, welche Strahlung des Infrarotstrahlers (1) auf den Infrarotsensor (2) reflektiert beziehungsweise streut.

3. Anordnung nach Anspruch 2, **dadurch gekennzeichnet, dass** die genannte Fläche (3) Teil der Wandung eines den Infrarotstrahler (1) und den Infrarotsensor (2) umgebenden Gehäuses (4) bildet.

4. Anordnung nach Anspruch 2, **dadurch gekennzeichnet, dass** die genannte Fläche (3) durch ein Infrarot-Filter gebildet ist, welches in mindestens einem Teil des Infrarot-Spektrums reflektierend wirkt.

5. Anordnung nach Anspruch 3 oder 4, **dadurch gekennzeichnet, dass** das Gehäuse (4) eine Öffnung zum Druckausgleich aufweist.

6. Anordnung nach einem der Ansprüche 1 bis 5, **dadurch gekennzeichnet, dass** der Infrarotstrahler (1) eine ebene emittierende Fläche in Gestalt einer dünnen Membran aufweist.

7. Anordnung nach einem der Ansprüche 1 bis 6, **dadurch gekennzeichnet, dass** der Infrarotsensor (2) mindestens ein pyroelektrisches Element in Form eines sogenannten Flake enthält.

8. Anordnung nach Anspruch 7, **dadurch gekennzeichnet, dass** das Flake aus pyroelektrischer Keramik oder aus einem pyroelektrischen Einkristall besteht und eine Fläche von einigen Quadratmillimetern sowie eine Dicke zwischen 0.1 und 200 Mikrometer aufweist.

9. Anordnung nach Anspruch 8, **dadurch gekennzeichnet, dass** der Infrarotsensor (2) einen JFET als Impedanzwandler und mindestens einen hochohmigen Widerstand enthält.

10. Anordnung nach einem der Ansprüche 1 bis 6, **dadurch gekennzeichnet, dass** der Infrarotsensor (2) mindestens ein Thermoelement in Form eines Dünnfilms enthält.

11. Anordnung nach Anspruch 10, **dadurch gekennzeichnet, dass** der Infrarotsensor (2) einen Verstärker aufweist.
